# EUROPEAN PATENT APPLICATION

(11) **EP 3 778 814 A1**
(43) Date of publication of application: **17.02.2021**
(21) Application number: 19209397.9
(22) Date of filing: 15.11.2019
(51) Int. Cl.: C09J 7/29

(54) **TEMPERED GLASS PROTECTIVE FILM FOR ULTRASONIC FINGERPRINT RECOGNITION FUNCTION**

(30) Priority: 13.08.2019 CN 201910746165
(71) Applicant: Shenzhen Taiji Opto-Elec Co., Ltd., Shenzhen, Guangdong (CN)
(72) Inventor: WEN, Zhiguang, Yichun City, Jiangxi Province (CN)
(74) Representative: Viering, Jentschura & Partner mbB Patent- und Rechtsanwälte

(57) **Abstract**

A tempered glass protective film for ultrasonic fingerprint recognition function is configured to solve the problem that the echo energy received by the ultrasonic fingerprint sensor is low and the clear fingerprint image cannot be obtained after the tempered glass protective film is used on the electronic device. The tempered glass protective film includes a glass layer, a first glue layer and a second glue layer arranged in a top-to-bottom sequence, in which the first glue layer is an OCA glue layer, and the second glue layer is a silicone layer or a PU glue layer. The thickness of the OCA glue layer gradually decreases from the edge to the center, and correspondingly, the thickness of the tempered glass protective film gradually decreases from the edge to the center. The tempered glass protective film has better impact resistance while improving the echo energy received by the ultrasonic fingerprint sensor.

## Description

### FIELD OF THE DISCLOSURE

The present disclosure relates to an electronic device protective film, in particular, to a tempered glass protective film for ultrasonic fingerprint recognition function.

### BACKGROUND OF THE DISCLOSURE

Electronic device protective films are widely used in smartphones, tablets, IPADs, etc. to protect the screen of electronic devices. At present, the protective film for electronic devices is roughly classified into a general protective film and a tempered glass protective film, both of which prevent the screen of the electronic device from being scratched. Compared with the general protective film, the tempered glass protective film has the characteristics of high hardness and low toughness, so it has better impact resistance, and the screen can be protected from damage when the electronic device drops.

As a biometric feature, fingerprints are unique and widely used to verify identity, and have been used in some electronic devices such as smartphones, tablets, and IPADs to unlock these electronic devices. Fingerprint sensors are used to collect fingerprints, which can be divided into contact and non-contact. Fingers press the contact fingerprint sensor on the acquisition window to recognize the fingerprints. Non-contact fingerprint sensors currently have an ultrasonic fingerprint sensor that recognizes fingerprints by transmitting and detecting reflected ultrasonic waves. Since the ultrasonic wave has penetrability, it can penetrate the outer casing of the electronic device. Therefore, the ultrasonic fingerprint sensor can recognize the fingerprint even if it is disposed inside the outer casing of the electronic device, so that the fingerprint collection window can be set in the outer casing of the electronic device, and the aesthetic appearance of the electronic device can be increased.

In summary, compared with the general protective film and contact fingerprint sensors, tempered glass protective film and ultrasonic fingerprint sensor have obvious advantages in electronic devices such as smartphones, tablets, IPADs, etc. However, it is difficult for the two to be applied together on such electronic devices. The main reason is that the ability of ultrasonic waves to penetrate the tempered glass protective film is weak, and only a small part of the ultrasonic waves emitted by the ultrasonic fingerprint sensor can penetrate the tempered glass protective film to reach the finger. After being reflected by the finger, the ultrasonic waves that can reversely penetrate the tempered glass protective film back to the ultrasonic fingerprint sensor are less, which results in the inability to obtain a clear fingerprint image.

### SUMMARY OF THE DISCLOSURE

The object of the present disclosure is to provide a tempered glass protective film for ultrasonic fingerprint recognition function, which is configured to solve the problem that the echo energy received by the ultrasonic fingerprint sensor is low and the clear fingerprint image cannot be obtained after the tempered glass protective film is used on the electronic device.

In order to achieve the above object, the technical solution adopted by the present disclosure is as follows.

A tempered glass protective film for ultrasonic fingerprint recognition function is provided, wherein the tempered glass protective film comprises a glass layer, a first glue layer and a second glue layer arranged in a top-to-bottom sequence; wherein the first glue layer is an OCA (Optically Clear Adhesive) glue layer, the second glue layer is a silicone layer or a PU glue layer; wherein the thickness of the OCA glue layer gradually decreases from the edge to the center, and correspondingly, the thickness of the tempered glass protective film gradually decreases from the edge to the center.

Preferably, a center thickness of the OCA glue layer is between 50 µm and 90 µm, an edge thickness of the OCA glue layer is between 250 µm and 350 µm, a center thickness of the tempered glass protective film is between 350 µm and 420 µm, and an edge thickness of the tempered glass protective film is between 500 µm s and 600 µm.

Preferably, the glass layer has a uniform thickness and the thickness is between 100 µm and 300 µm, and the second glue layer has a uniform thickness and the thickness is between 15 µm and 20 µm.

Preferably, a PC (Polycarbonate) layer or a PET layer is further disposed between the OCA glue layer and the second glue layer, and the PC layer or the PET layer has a uniform thickness and the thickness is between 30 µm and 50 µm.

More preferably, a center thickness of the OCA glue layer is 80 µm, an edge thickness of the OCA glue layer is 300 µm, a thickness of the glass layer is 200 µm, a thickness of the PC layer or a thickness of the PET layer is 38 µm, and a thickness of the second glue layer is 20 µm.

Preferably, a first release film is attached to an upper surface of the glass layer, and a second release film is attached to a lower surface of the second glue layer.

Preferably, the first release film is one of a PET film, a PE film, a PP film, and a PVC film, and the second release film is one of a PET film, a PE film, a PP film, and a PVC film.

Preferably, the first release film has a peeling force of between 3 gf and 6 gf, and the second release film has a peeling force of between 3gf and 6gf.

Compared with the prior art, the present disclosure has at least the following beneficial effects. The tempered glass protective film has a thin central portion and a thick edge. When used, the ultrasonic wave is transmitted between the ultrasonic fingerprint sensor and the finger through the central portion of the tempered glass protective film, and the thinner central portion effectively improves the echo energy received by the ultrasonic fingerprint sensor, thereby enabling the ultrasonic fingerprint sensor to obtain a clear fingerprint image, while the thicker edge ensures better impact resistance, and the screen can be protected from damage when the electronic device drops.

### BRIEF DESCRIPTION OF THE DRAWINGS

FIG. 1 is a schematic structural view of a first embodiment of the tempered glass protective film.
FIG. 2 is a schematic structural view of a second embodiment of the tempered glass protective film.
FIG. 3 is a schematic structural view of a third embodiment of the tempered glass protective film.
FIG. 4 is a schematic structural view of a fourth embodiment of the tempered glass protective film.

Reference numerals: 1: silicone layer; 2: PC layer; 3: OCA layer; 4: glass layer; 5: first release film; 6: second release film.

### DETAILED DESCRIPTION OF THE EXEMPLARY EMBODIMENTS

The present disclosure will be further described below in conjunction with the drawings and embodiments.

In the present disclosure, the entire tempered glass protective film is configured to have a thin central portion and a thick edge by making the OCA layer of the tempered glass protective film into a structure with a thin central portion and a thick edge. When used, the ultrasonic wave is transmitted between the ultrasonic fingerprint sensor and the finger through the central portion of the tempered glass protective film, and the thinner central portion effectively improves the echo energy received by the ultrasonic fingerprint sensor, thereby enabling the ultrasonic fingerprint sensor to obtain a clear fingerprint image, while the thicker edge ensures better impact resistance, and the screen can be protected from damage when the electronic device drops.

The tempered glass protective film of the present disclosure may be a protective film attached to a display screen of an electronic device, or may be a protective film attached to the back of the electronic device.

### First embodiment

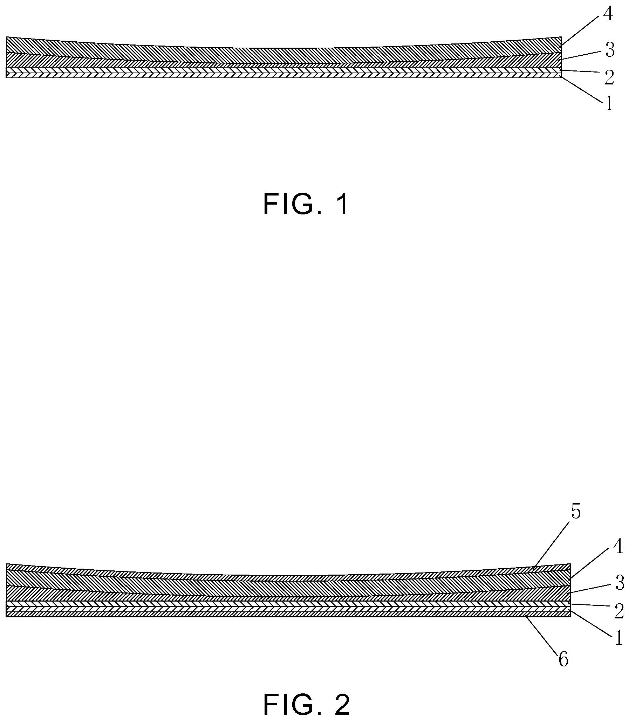

The structure of the tempered glass protective film for the ultrasonic fingerprint recognition function is schematically shown in FIG. 1. As shown in FIG. 1, the tempered glass protective film includes a glass layer 4, an OCA glue layer 3, a PC layer 2 and a silicone layer 1 arranged in a top-to-bottom sequence, and the layers are closely adhered and bonded together as a whole. The thickness of the OCA glue layer 3 gradually decreases from the edge to the center, and correspondingly, the entire thickness of the tempered glass protective film gradually decreases from the edge to the center. The silicone layer 1 is bonded to the surface of the electronic device during use.

In the first embodiment, the entire bottom surface of the tempered glass protective film (the surface for attaching the electronic device) has a planar structure, and the top surface has a concave curved surface structure and is suitable for an electronic device whose surface is flat.

A method for preparing the tempered glass protective film is as follows: coating silica gel on a first surface of a PC film (the PC film constituting the PC layer 2), drying the silica gel to obtain the silicone layer 1, then coating OCA glue on a second surface of the PC film, drying the OCA glue to obtain the OCA glue layer 3, and then a piece of glass is bonded to the OCA glue layer 3 to obtain the tempered glass protective film. The coating process may employ gravure coating, blade coating, extrusion coating, and slit coating. Drying is preferably carried out in an oven at 100 to 130 degrees Celsius. The OCA glue is optical glue used to bond transparent optical components with a light transmittance of over 90% and can be cured at room temperature or medium temperature.

The center thickness of the tempered glass protective film is preferably from 350 µm to 420 µm, and the edge thickness of the tempered glass protective film is preferably from 500 µm to 600 µm. The center thickness of the OCA glue layer 3 is preferably from 50 µm to 90 µm, and the edge thickness of the OCA glue layer 3 is preferably from 250 µm to 350 µm. The thickness of the glass layer 4 is uniform and preferably from 100 µm to 300 µm, and the thickness of the silicone layer 1 is uniform and preferably from 15 µm to 20 µm. The thickness of the PC layer 2 is uniform and preferably from 30 µm to 50 µm. Under the specification, the tempered glass protective film has better ultrasonic penetrability performance and better impact resistance.

The center thickness of the OCA glue layer 3 is more preferably 80 µm, the edge thickness of the OCA glue layer 3 is more preferably 300 µm, the thickness of the glass layer 4 is more preferably 200 µm, the thickness of the PC layer 2 is more preferably 38 µm, and the thickness of the silicone layer 1 is more preferably 20 µm.

### Second embodiment

Referring to FIG. 2, the tempered glass protective film of the second embodiment is based on the first embodiment, and further, a first release film 5 is adhered to the upper surface of the glass layer 4, and a second release film 6 is adhered to the lower surface of the silicone layer 1.

The first release film 5 may be a PET film, a PE film, a PP film or a PVC film, preferably a PP film, preferably having a thickness of 40 µm to 90 µm, and a peeling force of the first release film 5 is preferably 3 gf to 6 gf. Similarly, the second release film 6 may also be a PET film, a PE film, a PP film or a PVC film, preferably a PP film, preferably having a thickness of 40 µm to 90 µm, and a peeling force of the second release film 6 is preferably 3 gf to 6 gf.

The first release film 5 and the second release film 6 are used to protect the surface of the glass layer 4 and the surface of the silicone layer 1 before the tempered glass protective film is attached to the electronic device. In use, the second release film 6 is peeled off, the silicone layer 1 is attached to the screen of the electronic device, and then the first release film 5 is peeled off.

### Third embodiment

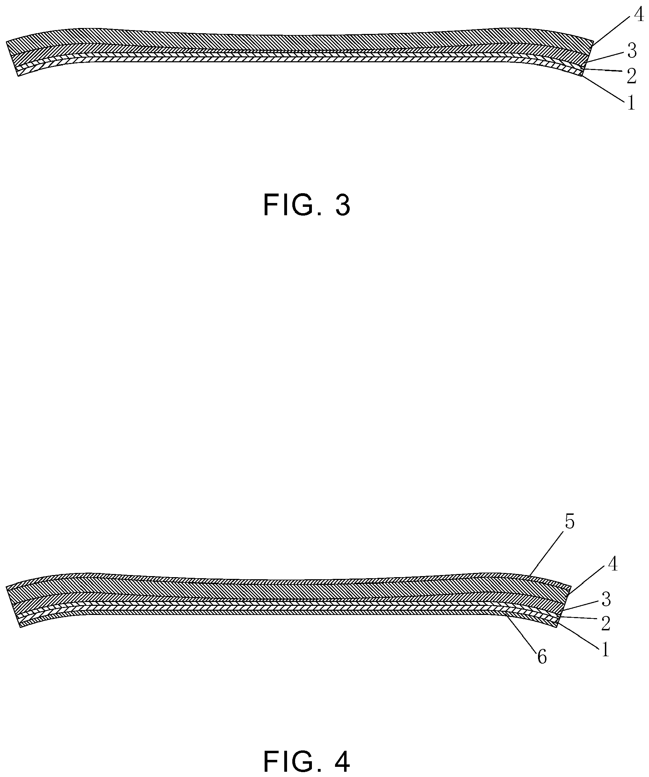

Referring to FIG. 3, the third embodiment has the same layered structure as the first embodiment, that is, the tempered glass protective film includes a glass layer 4, an OCA glue layer 3, a PC layer 2, and a silicone layer 1 arranged in a top-to-bottom sequence. The layers are closely adhered and bonded together as a whole. The thickness of the OCA glue layer 3 gradually decreases from the edge to the center, and correspondingly, the entire thickness of the tempered glass protective film gradually decreases from the edge to the center. The difference from the first embodiment is that in the third embodiment, the entire bottom surface of the tempered glass protective film (the surface for attaching the electronic device) has a concave curved surface structure, and is suitable for an electronic device whose surface is curved, such as a curved screen mobile phone.

### Fourth embodiment

Referring to FIG. 4, the tempered glass protective film of the fourth embodiment is based on the third embodiment, and further, a first release film 5 is adhered to the upper surface of the glass layer 4, and a second release film 6 is adhered to the lower surface of the silicone layer 1.

The above-mentioned descriptions represent merely an exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A tempered glass protective film for ultrasonic fingerprint recognition function, wherein the tempered glass protective film comprises a glass layer, a first glue layer and a second glue layer arranged in a top-to-bottom sequence; wherein the first glue layer is an OCA glue layer, the second glue layer is a silicone layer or a PU glue layer; wherein the thickness of the OCA glue layer gradually decreases from the edge to the center, and correspondingly, the thickness of the tempered glass protective film gradually decreases from the edge to the center.

2. The tempered glass protective film for ultrasonic fingerprint recognition function according to claim 1, wherein a center thickness of the OCA glue layer is between 50 µm and 90 µm, an edge thickness of the OCA glue layer is between 250 µm and 350 µm, a center thickness of the tempered glass protective film is between 350 µm and 420 µm, and an edge thickness of the tempered glass protective film is between 500 µm and 600 µm.

3. The tempered glass protective film for ultrasonic fingerprint recognition function according to claim 2, wherein the glass layer has a uniform thickness and the thickness is between 100 µm and 300 µm, and the second glue layer has a uniform thickness and the thickness is between 15 µm and 20 µm.

4. The tempered glass protective film for ultrasonic fingerprint recognition function according to claim 3, wherein a PC layer or a PET layer is further disposed between the OCA glue layer and the second glue layer, and the PC layer or the PET layer has a uniform thickness and the thickness is between 30 µm and 50 µm.

5. The tempered glass protective film for ultrasonic fingerprint recognition function according to claim 4, wherein a center thickness of the OCA glue layer is 80 µm, an edge thickness of the OCA glue layer is 300 µm, a thickness of the glass layer is 200 µm, a thickness of the PC layer or a thickness of the PET layer is 38 µm, and a thickness of the second glue layer is 20 µm.

6. The tempered glass protective film for ultrasonic fingerprint recognition function according to claim 1, wherein a first release film is attached to an upper surface of the glass layer, and a second release film is attached to a lower surface of the second glue layer.

7. The tempered glass protective film for ultrasonic fingerprint recognition function according to claim 6, wherein the first release film is one of a PET film, a PE film, a PP film, and a PVC film, and the second release film is one of a PET film, a PE film, a PP film, and a PVC film.

8. The tempered glass protective film for ultrasonic fingerprint recognition function according to claim 7, wherein the first release film has a peeling force of between 3 gf and 6 gf, and the second release film has a peeling force of between 3gf and 6gf.
